# EUROPEAN PATENT APPLICATION

(11) **EP 4 675 742 A1**
(43) Date of publication of application: **07.01.2026**
(21) Application number: 24763632.7
(22) Date of filing: 15.02.2024
(51) Int. Cl.: H01M 10/058, H01M 4/13, H01M 10/052, H01M 10/0587, H01M 50/417, H01M 50/494, H01M 50/531

(54) **NON-AQUEOUS ELECTROLYTE SECONDARY BATTERY**

(30) Priority: 28.02.2023 JP 2023030106
(71) Applicant: Panasonic Intellectual Property Management Co., Ltd., Kadoma-shi, Osaka 571-0057 (JP)
(72) Inventor: UCHIYAMA, Yohei, Kadoma-shi, Osaka 571-0057 (JP); FUKUOKA, Takahiro, Kadoma-shi, Osaka 571-0057 (JP)
(74) Representative: Novagraaf International SA
(86) International application number: PCT/JP2024/005262
(87) International publication number: WO 2024/181149

(57) **Abstract**

A nonaqueous electrolyte secondary battery includes a positive electrode, a negative electrode, a separator, and a nonaqueous electrolyte. The positive electrode includes a positive electrode current collector, a positive electrode active material layer, and a positive electrode tab. The positive electrode current collector has a first region and a second region. The first region carries the positive electrode active material layer. The second region does not carry the positive electrode active material layer and has a tab connecting portion. The positive electrode tab is connected to the tab connecting portion. When the positive electrode is viewed in plan, the outer contour of the positive electrode active material layer has at least one first side adjacent to the second region, a plurality of second sides not adjacent to the second region, and first corners where the first side and corresponding second sides intersect. The positive electrode active material layer has edge treatment at the first corners.

## Description

### [Cross-Reference to Related Applications]

The present application is based on and claims priority under 35 U.S.C. §119 with respect to Japanese Patent Application No. 2023-030106, filed on February 28, 2023, of which entire content is incorporated herein by reference into the present application.

### [Technical Field]

The present disclosure relates to a nonaqueous electrolyte secondary battery.

### [Background Art]

Patent Literature 1 proposes an electrode group which is "a spiral electrode group for batteries in which a thin nickel positive electrode and a thin metal hydride negative electrode are substantially concentrically and spirally wound with a separator therebetween, wherein the thin nickel positive electrode is composed of a plurality of positive electrode plates successively wound in series, the thin metal hydride negative electrode is composed of one or a plurality of negative electrode plates successively wound in series, (3) in each of the electrodes constituted of a plurality of electrode plates, the plurality of electrode plates are combined so that the total of the weights of an active material and/or the weights of a quasi-active material in the electrode is substantially equal, the plurality of electrode plates of the electrode constituted of the plurality of electrode plates are wound in series at intervals, and in the plurality of the electrode plates of the electrode constituted of the plurality of electrode plates, the electrode thickness at the winding start side is smaller than the electrode thickness at the winding end side", wherein "at least two corners of each of the plurality of electrode plates constituting the positive electrode and the negative electrode are edge-treated".

### [Citation List]

### [Patent Literature]

Patent Literature 1: Japanese Laid-Open Patent Publication No.2002-134161

### [Summary of Invention]

### [Technical Problem]

Repetition of charge-discharge cycles leads to end-of-life, which is mainly caused by internal short circuits. In particular, when current is locally concentrated in the positive electrode, deposition of lithium metal is likely to proceed, leading to a possibility of the occurrence of an internal short circuit.

### [Solution to Problem]

One aspect of the present disclosure relates to a nonaqueous electrolyte secondary battery including: a positive electrode; a negative electrode; a separator provided between the positive electrode and the negative electrode; and a nonaqueous electrolyte, wherein the positive electrode includes a positive electrode current collector, a positive electrode active material layer, and a positive electrode tab, the positive electrode current collector has a first region and a second region, the first region carries the positive electrode active material layer, the second region does not carry the positive electrode active material layer and has a tab connecting portion, the positive electrode tab is connected to the tab connecting portion, when the positive electrode is viewed in plan, an outer contour of the positive electrode active material layer has one or more first sides adjacent to the second region, a plurality of second sides not adjacent to the second region, and a first corner where the first side and the second side intersect, and the positive electrode active material layer has edge treatment at the first corner.

Another aspect of the present disclosure relates to a nonaqueous electrolyte secondary battery including: a positive electrode; a negative electrode; a separator provided between the positive electrode and the negative electrode; and a nonaqueous electrolyte, wherein the positive electrode includes a positive electrode current collector, a positive electrode active material layer, and a positive electrode tab, the positive electrode current collector has a first region and a second region, the first region carries the positive electrode active material layer, the second region does not carry the positive electrode active material layer and has a tab connecting portion, the positive electrode tab is connected to the tab connecting portion, when the positive electrode is viewed in plan, an outer contour of the positive electrode active material layer has at least one first side adjacent to the second region and a plurality of second sides not adjacent to the second region, and an end of the positive electrode active material layer corresponding to the first side has edge treatment in a cross-sectional profile in a thickness direction.

### [Advantageous Effects of Invention]

According to the present disclosure, the occurrence of inner short circuits due to charge-discharge cycles can be suppressed in a nonaqueous electrolyte secondary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1A] FIG. 1A is a conceptual plan view of an example of the configuration of a positive electrode according to the present disclosure.
[FIG. 1B] FIG. 1B is a conceptual longitudinal cross-sectional view of a part of the stacked structure of a positive electrode and a separator.
[FIG. 1C] FIG. 1C is a transverse cross-sectional view of an example of the positive electrode according to the present disclosure along the long-side direction.
[FIG. 2A] FIG. 2A is a conceptual plan view of another example of the configuration of the positive electrode according to the present disclosure.
[FIG. 2B] FIG. 2B is a conceptual plan view of yet another example of the configuration of the positive electrode according to the present disclosure.
[FIG. 3] FIG. 3 is a conceptual plan view of still another example of the configuration of the positive electrode according to the present disclosure.
[FIG. 4] FIG. 4 is a schematic longitudinal cross-sectional view of an example of a cylindrical nonaqueous electrolyte secondary battery.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

### (Nonaqueous Electrolyte Secondary Battery)

A nonaqueous electrolyte secondary battery according to the present disclosure includes a positive electrode, a negative electrode, a separator, and a nonaqueous electrolyte. The shapes of the positive electrode, the negative electrode, and the separator may be a band shape. Each of the band-shaped positive and negative electrodes may be wound with the band-shaped separator therebetween to form a columnar electrode group (electrode body). The positive electrode, the negative electrode, and the separator may be stacked to form a stacked electrode group. That is, the electrode group may be either of the wound type or of the stacked type. The nonaqueous electrolyte has lithium ion conductivity, for example.

The positive electrode includes a positive electrode current collector, a positive electrode active material layer, and a positive electrode tab. The positive electrode tab is a current collecting member that conducts current from the positive electrode to an external terminal, and is typically a ribbon-shaped, strip-shaped, or narrow rectangular-shaped conductive member (e.g., a metal foil). The positive electrode tab may also be referred to as positive electrode lead, for example.

The positive electrode current collector has a first region and a second region. The first region carries the positive electrode active material layer. The first region is a majority of the positive electrode current collector. The second region is an area that does not carry the positive electrode active material layer. The second region has a positive electrode current collector exposed portion. The second region has a tab connecting portion. The positive electrode tab is connected to the tab connecting portion. Specifically, the tab connecting portion is connected to the positive electrode current collector exposed portion. The tab connecting portion may be referred to as positive electrode lead connecting portion, for example.

The tab connecting portion is a region to which a part of the positive electrode tab is connected and that has a side from which the remaining portion (i.e., a protruding portion) of the positive electrode tab protrudes, and is typically a rectangular region. The tab connecting portion is a rectangular region at least partially overlapping with a part of the positive electrode tab other than the protruding portion. The tab connecting portion does not necessarily overlap entirely with the tab. The tab connecting portion may constitute the entirety of the second region or may constitute at least a part of the second region. At least a part of the tab connecting portion may be shielded with tape or film having insulating properties, for example.

When the positive electrode is viewed in plan, the outer contour (outer shape) of the positive electrode active material layer has at least one first side adjacent to the second region and a plurality of second sides not adjacent to the second region. When the second region includes a region other than the tab connecting portion, each first side is a side adjacent to the tab connecting portion.

One of the simplest aspects is that the second region is composed of one rectangular region at one end of the positive electrode current collector in the long-side direction and the rest of the positive electrode current collector is the first region. In this case, the entirety of the second region is the tab connecting portion. The outer contour of the positive electrode active material layer has one first side and three second sides.

The positive electrode according to the present disclosure satisfies at least one of the following conditions (A) and (B).

(A) When the positive electrode is viewed in plan, the outer contour of the positive electrode active material layer (hereinafter, also simply referred to as "positive electrode active material layer outer contour") has a first corner where the first side and the second side intersect, and the positive electrode active material layer has edge treatment at the first corner.
(B) An end of the positive electrode active material layer corresponding to the first side has edge treatment in a cross-sectional profile in the thickness direction of the positive electrode active material layer outer contour.

When charge-discharge cycles are repeated, the separator is locally compressed due to expansion of the electrode plate or the like to extremely reduce the distance between the positive and negative electrodes, thereby causing local current concentration in the positive electrode. However, satisfaction of at least one of the conditions (A) and (B) reduces the risk of such local current concentration in the positive electrode and likelihood of internal short circuit occurrence due to deposition of lithium metal and the like inside and outside the separator.

The condition (A) is, in other words, a condition that a corner (first corner) of the positive electrode active material layer in the vicinity of the positive electrode tab has edge treatment. In the case where there are a plurality of first corners, provision of at least one edge-treated first corner can achieve an effect of suppressing current concentration, thereby achieving a certain effect of suppressing internal short circuits.

The "cross-sectional profile" in the condition (B) refers to the profile of a cross section formed by cutting a region including a first side of the positive electrode active material layer (i.e., a region including the boundary between the first region and the second region of the positive electrode current collector) in a direction parallel to the thickness direction and perpendicular to the first side.

The positive electrode active material layer outer contour can have a second corner where second sides intersect. In this case, the positive electrode active material layer may further have edge treatment at the second corner. This further reduces the likelihood of local current concentration in the positive electrode. When there are a plurality of second corners, a certain effect of suppressing current concentration can be achieved by edge treatment on at least one of the second corners.

The positive electrode active material layer outer contour can have a third corner where first sides intersect. For example, when the second region is a rectangular region having a side from which the protrusion of the positive electrode tab protrudes, the other three second sides can each be the first side. In this case, the positive electrode active material layer may further have edge treatment at the third corner. This further reduces the risk of local current concentration in the positive electrode. When there are a plurality of third corners, a certain effect of suppressing current concentration can be achieved by edge treatment on at least one of the third corners.

Note that the state in which the positive electrode active material layer has edge treatment can include a state in which both the positive electrode active material layer and the positive electrode current collector have edge treatment. As such, any corners (any of the first, second, or third corners) of the positive electrode active material layer and the underlying positive electrode current collector may have edge treatment.

The edge-treated shape under the conditions (A) and (B) is not particularly limited, and may be, for example, a chamfered shape or a rounded shape. The chamfered shape has an angle relative to a first side of typically 45° but may be a slope with an angle in the range of 30° to 60°. The rounded shape is more desirable than the chamfered shape because the current concentration is likely to be suppressed.

In rounding under the condition (A), the radius of curvature at a part with the highest curvature may be, for example, 0.5 mm or more and 10 mm or less, or 1 mm or more and 3 mm or less.

In chamfering under the condition (A), the length of the slope of the edge-treated part may be, for example, 0.5 mm or more and 10 mm or less, or 1 mm or more and 3 mm or less.

In rounding under the condition (B), the radius of curvature at a part with the highest curvature should be equal to or less than a thickness T of the positive electrode active material layer, and may be, for example, 0.01 mm or more, or 0.05 mm or more.

In chamfering under the condition (B), the inclination angle of the slope (tapered surface) of the edge-treated part relative to the surface of the positive electrode current collector may be 1° or more and 80° or less, or 10° or more and 45° or less. The length of the slope (tapered surface) of the edge-treated part may be, for example, 150% or more and 30,000% or less of the thickness T of the positive electrode active material layer or may be 2000% or more and 15,000% or less.

The nonaqueous electrolyte secondary battery according to the present disclosure may be a lithium secondary battery (lithium-metal secondary battery) including a negative electrode in which lithium metal is deposited in charging and dissolved in discharging. In this case, the negative electrode includes at least a negative electrode current collector. The lithium metal is deposited on the negative electrode current collector. Since the lithium secondary battery performs charging and discharging by a mechanism in which the lithium metal is deposited between the electrodes, the effect achieved by satisfying at least one of the conditions (A) and (B) is particularly pronounced.

The lithium secondary battery may include a spacer provided between the separator and at least one of the positive electrode and the negative electrode. The spacer plays at least a role of ensuring a space between the electrodes where the lithium metal is to be deposited. The positive electrode and the negative electrode may be wound with the spacer and the separator therebetween to form a wound electrode group. The positive electrode, the negative electrode, the separator, and the spacer may be stacked to form a stacked electrode group.

In a lithium secondary battery, for example, 70% or more of the rated capacity is expressed by deposition and dissolution of the lithium metal. Electron transfer in the negative electrode in charging and discharging is mainly due to deposition and dissolution of the lithium metal in the negative electrode. Specifically, 70 to 100% (e.g., 80 to 100% or 90 to 100%) of electron transfer (in another aspect, current) in the negative electrode during charging and discharging is due to deposition and dissolution of the lithium metal. That is, the negative electrode of the lithium secondary battery differs from a negative electrode in which electron transfer in charging and discharging is mainly due to absorption and release of lithium ions by a negative electrode active material (e.g., graphite).

Hereinafter, exemplary embodiments of the present disclosure will be specifically described with reference to the drawings. The elements of configuration described above are applicable to the elements of the configuration of the nonaqueous electrolyte secondary battery described below. The elements of configuration of the exemplary nonaqueous electrolyte secondary battery described below can be altered based on the above description. Further, the matters described below may be applied to the above-described embodiments. Any elements of configuration that are not essential to the nonaqueous electrolyte secondary battery of the present disclosure may be omitted.

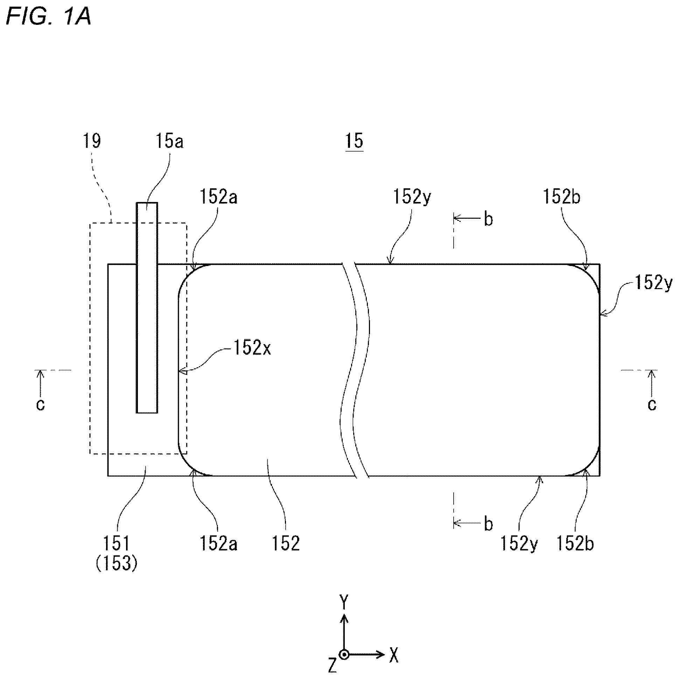

FIG. 1A is a conceptual plan view of an example of the configuration of a positive electrode 15 when viewed in plan. The term "viewed in plan" refers to viewing the positive electrode 15 in a direction parallel to the thickness direction (Z direction in FIG. 1A) of the positive electrode. The XY plane in FIG. 1A is parallel to the surface of the positive electrode current collector.

A positive electrode current collector 151 is divided into a first region carrying a positive electrode active material layer 152 and a second region not carrying the positive electrode active material layer 152. The second region is an exposed portion of the positive electrode current collector 151, has a tab connecting portion 153 at one end of the positive electrode current collector 151 in the long-side direction, and has a small and substantially triangular area at each corner of the other end.

A positive electrode tab 15a is connected to the tab connecting portion 153. A part of the tab connecting portion 153 is covered, together with a part of the positive electrode tab 15a, with an insulative tape 19, the outer shape of which is indicated by a dashed line. The outer contour of the positive electrode active material layer 152 has one first side 152x adjacent to the second region and parallel to the Y direction, and three second sides 152y not adjacent to the second region. The positive electrode active material layer 152 is rounded at first corners 152a where the first side 152x and the corresponding second sides 152y intersect. In the above configuration, the condition (A) is satisfied. Although the positive electrode active material layer 152 is also rounded at second corners 152b where the second sides 152y intersect, such edge treatment at the second corners 152b is not essential.

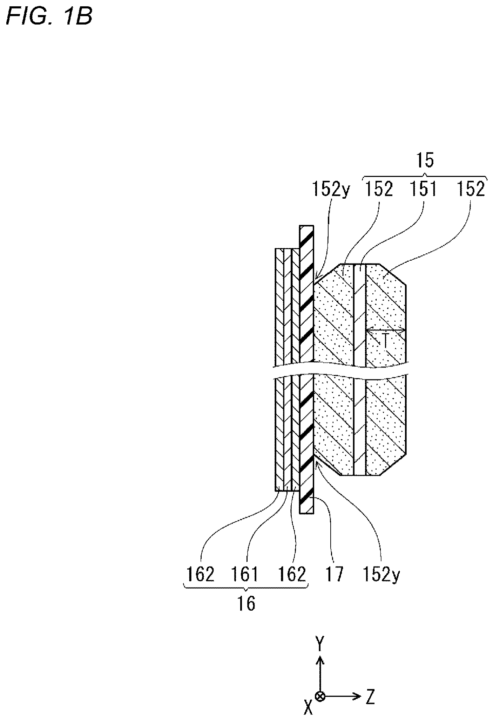

FIG. 1B is a conceptual longitudinal cross-sectional view of a part of the configuration of an exemplary electrode group. FIG. 1B illustrates a stacked structure of the positive electrode 15 in FIG. 1A, a negative electrode 16, and a separator 17 provided therebetween. The longitudinal cross-sectional view of the positive electrode 15 is a cross-sectional view taken along a YZ plane in FIG. 1A and corresponds to an arrow view taken along a line b-b in FIG. 1A. FIG. 1B illustrates a cross-sectional profile in the thickness direction in a state in which the ends of the positive electrode active material layer 152, which correspond to the second sides 152y parallel to the X direction, are chamfered.

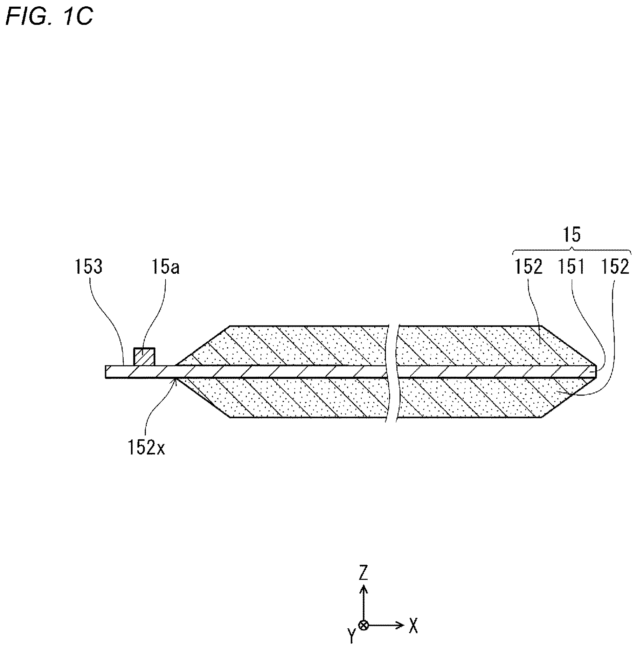

FIG. 1C is a transverse cross-sectional view taken along the long-side direction of the positive electrode 15 illustrated in FIG. 1A. The transverse cross-sectional view of the positive electrode 15 is a cross-sectional view taken along a ZX plane in FIG. 1A and corresponds to an arrow view taken along a line c-c in FIG. 1A. FIG. 1C illustrates a cross-sectional profile in the thickness direction in a state in which the end of the positive electrode active material layer 152, which corresponds to the first side 152x parallel to the Y direction, is chamfered. In this case, the positive electrode 15 satisfies the condition (B) as well.

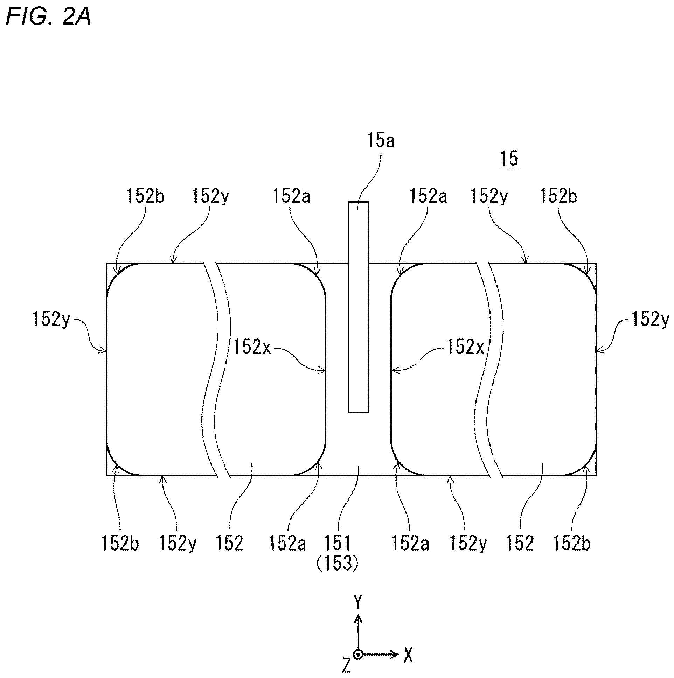

FIG. 2A is a conceptual plan view illustrating the configuration of another example of the positive electrode 15 when viewed in plan. The positive electrode current collector 151 has two first regions carrying the positive electrode active material layer 152. Between the two first regions, an exposed portion of the positive electrode current collector 151 that does not carry the positive electrode active material layer 152 is provided as a tab connecting portion 153. The second region has a central tab connecting portion 153 and a small and substantially triangular area at each of the four corners of the positive electrode 15.

The positive electrode tab 15a is connected to the central tab connecting portion 153. The insulative tape covering the tab connecting portion 153 is not illustrated. The outer two contours of the positive electrode active material layer 152 each have one first side 152x adjacent to the second region and parallel to the Y-direction, and three second sides 152y not adjacent to the second region. The positive electrode active material layer 152 is rounded at each of four first corners 152a where the first sides 152x and the corresponding second sides 152y intersect. In the above configuration, the condition (A) is satisfied. The positive electrode active material layer 152 is also rounded at second corners 152b where the second sides 152y intersect.

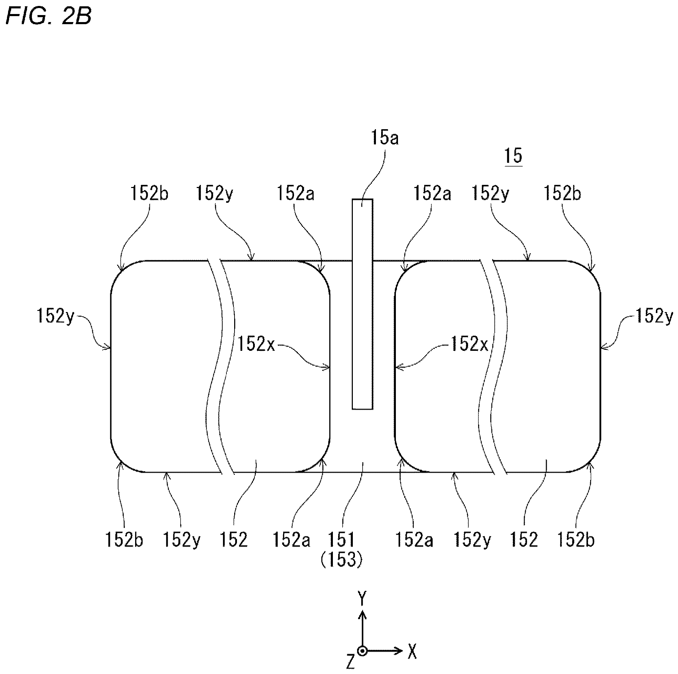

FIG. 2B is a conceptual plan view illustrating the configuration of yet another example of the positive electrode 15 when viewed in plan. The positive electrode 15 in FIG. 2B has the same configuration as the positive electrode in FIG. 2A, except that both the positive electrode active material layer 152 and the positive electrode current collector 151 have edge treatment in the small and substantially triangular areas at the four corners at the opposite ends.

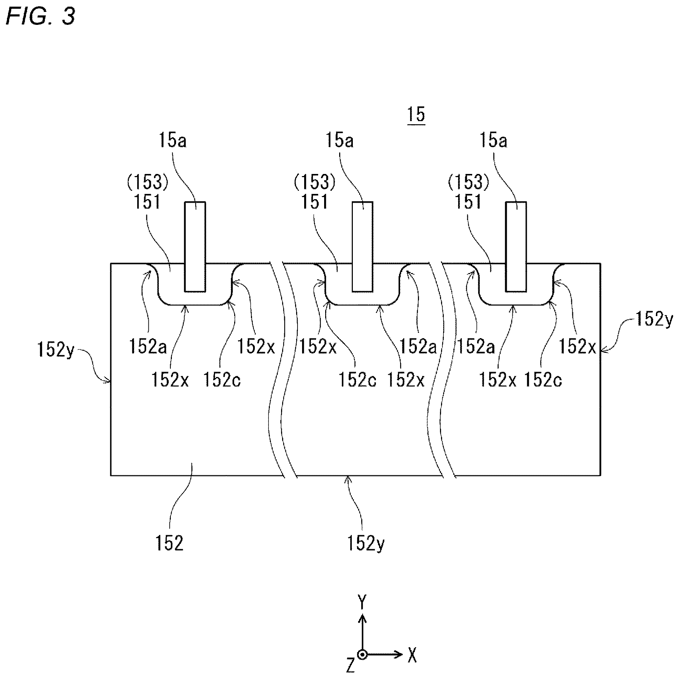

FIG. 3 is a conceptual plan view illustrating the configuration of still another example of the positive electrode 15 when viewed in plan. In the positive electrode 15 in FIG. 3, a plurality of exposed portions of the positive electrode current collector 151 are provided as second regions at an edge portion that includes one edge of the positive electrode in the short-side direction (Y direction). Each of the exposed portions of the positive electrode current collector 151 is a tab connecting portion 153. That is, a plurality of tab connecting portions 153 are intermittently provided along the long-side direction (X direction) of the positive electrode. The width of the edge part (the depth of the tab connecting portions 153) extending from the one edge of the positive electrode 15 in the short-side direction toward the central part of the positive electrode 15 is 8 mm or more and 12 mm or less, for example.

In FIG. 3, the outer contour of the positive electrode active material layer 152 has 2n first corners 152a and 2n third corners 152c along the shapes of the tab connecting portions 153. At each of the 2n first corners 152a, a first side 152x parallel to the Y direction and a second side 152y parallel to the X direction intersect. At each of the 2n third corners 152c, a first side 152x parallel to the X direction and first sides 152x parallel to the Y direction intersect. Here, n represents the number of the tab connecting portions 153. At both the first corners 152a and the third corners 152c, the positive electrode active material layer 152 or the exposed portions of the positive electrode current collector 151 is rounded.

The nonaqueous electrolyte secondary battery according to the present disclosure may be a liquid type secondary battery including an electrolyte solution as an electrolyte or an all-solid secondary battery including a solid electrolyte as an electrolyte. Hereinafter, the configuration of the nonaqueous electrolyte secondary battery will be specifically described by exemplifying a lithium-ion secondary battery or a lithium secondary battery.

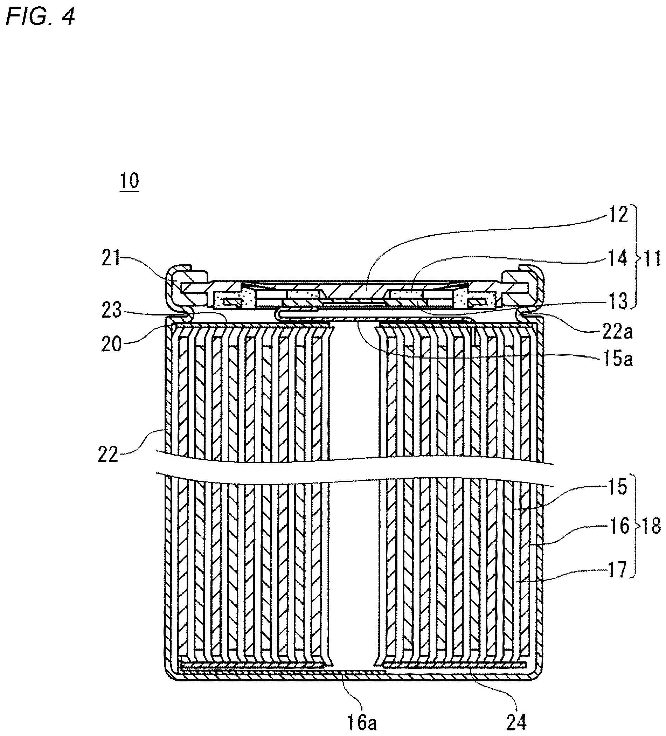

FIG. 4 is a longitudinal cross-sectional view of a cylindrical nonaqueous electrolyte secondary battery that is an example of an embodiment of the present disclosure. However, the present disclosure is not limited to the following configuration.

A secondary battery 10 includes an electrode group 18, an electrolyte solution (not illustrated), and a bottomed cylindrical battery can 22 that houses these. A sealing body 11 is crimped and fixed to the opening of the battery can 22 via a gasket 21. In the above configuration, the battery interior is sealed. The sealing body 11 includes a valve body 12, a metal plate 13, and an annular insulating member 14 provided between the valve body 12 and the metal plate 13. The valve body 12 and the metal plate 13 are connected to each other at their respective central parts. A positive electrode tab (positive electrode lead) 15a led out from the positive electrode 15 is connected to the metal plate 13. In the above configuration, the valve body 12 functions as a positive electrode external terminal. A negative electrode tub (negative electrode lead) 16a led out from the negative electrode 16 is connected to the inner bottom surface of the battery can 22. An annular groove 22a is formed in the vicinity of the opening end of the battery can 22. A first insulating plate 23 is provided between one of the end faces of the electrode group 18 and the annular groove 22a. A second insulating plate 24 is provided between the other end face of the electrode group 18 and the bottom of the battery can 22. The electrode group 18 is formed by winding the positive electrode 15 and the negative electrode 16 with the separator 17 therebetween. FIG. 4 is a cross-sectional view that is parallel to the Y-direction and along the winding axis of the electrode group.

### [Positive Electrode]

As the positive electrode, a positive electrode having the above-described features is used. The positive electrode includes a positive electrode current collector and a positive electrode active material layer. The positive electrode active material layer is constituted of a positive electrode mixture. The positive electrode mixture contains a positive electrode active material as an essential component and may contain an optional component. Example of the optional component include a binder, a conductive aid, and a thickener.

The positive electrode active material layer is much harder than, for example, the negative electrode, the separator, and lithium metal. The larger the thickness of such a hard positive electrode active material layer, the more pronounced the effects achieved by satisfying at least one of the conditions (A) and (B). The thickness of the positive electrode active material layer may be, for example, 30 µm or more and 200 µm or less, 30 µm or more and 160 µm or less, 50 µm or more and 150 µm or less, or 50 µm or more and 100 µm or less.

The thickness of the positive electrode tab is, for example, 50 µm or more and 300 µm or less, and may be 0.5 times to 2 times the thickness T of the positive electrode active material layer.

The average particle diameter (D50) of particles of the positive electrode active material is, for example, 1 µm or more and 50 µm or less, and may be 5 µm or more and 25 µm or less. The average particle diameter (D50) refers to the median diameter at which the cumulative volume reaches 50% in a volume-based particle size distribution.

The positive electrode active material may contain a lithium-containing transition metal oxide. From the viewpoint of capacity increase, it is desirable that the lithium-containing transition metal oxide contains lithium and Ni and contains a lithium nickel oxide (composite oxide N) having a layered rock-salt type crystal structure. The proportion of the composite oxide N in the positive electrode active material is, for example, 70% by mass or more, and may be 90% by mass or more, or 95% by mass or more. The proportion of Ni in the metal element(s) other than Li contained in the composite oxide N may be 50 at.% or more.

The composite oxide N is represented, for example, by the following formula (1): Li_{α}Niₓ₁M1ₓ₂M2₍₁₋ₓ₁₋ₓ₂)O_{2+β}. Here, an element M1 is at least one selected from the group consisting of V, Co, and Mn. An element M2 is at least one selected from the group consisting of Mg, Al, Ca, Ti, Cu, Zn, and Nb. The formula (1) satisfies 0.95 ≤ α ≤ 1.05, -0.05 ≤ β ≤ 0.05, 0.5 ≤ x1 < 1, 0 ≤ x2 ≤ 0.5, and 0 < 1 - x1 - x2 ≤ 0.5. The value α increases or decreases with charging or discharging.

The composite oxide N contains Ni and may contain, as the element M1 and the element M2, at least one selected from the group consisting of Co, Mn, and Al. Co, Mn, and Al contribute to stabilization of the crystal structure of the composite oxide N.

The composite oxide N can be represented, for example, by the following formula (2): Li_{α}Ni_{(1-y1-y2-y3-z)}Co_{y1}Mn_{y2}Al_{y3}M_{z}O_{2+β}. An element M is an element other than Li, Ni, Co, Mn, Al, and oxygen, and may be at least one selected from the group consisting of Ti, Zr, Nb, Mo, W, Fe, Zn, B, Si, Mg, Ca, Sr, Sc, and Y. The formula (2) satisfies 0.95 ≤ α ≤ 1.05, -0.05 ≤ β ≤ 0.05, 0 ≤ y1 ≤ 0.1, 0 ≤ y2 ≤ 0.1, 0 ≤ y3 ≤ 0.1, and 0 ≤ z ≤ 0.10. Note that 1-y1-y2-y3-z (= v) indicating the atomic ratio of Ni is, for example, 0.8 or more, and may be 0.85 or more, 0.90 or more, or 0.95 or more. Further, v representing the atomic ratio of Ni may be 0.98 or less, or 0.95 or less.

As the positive electrode current collector, a sheet-shaped conductive material (e.g., a metal foil, a mesh, a net, or a punched sheet) is used. Among these, a metal foil is preferable. Examples of the material of the positive electrode core include stainless steel, aluminum, aluminum alloys, and titanium. As the positive electrode current collector, a material obtained by applying a metal material to the surface of a resin film by physical vapor deposition (PVD) or the like may be used. The thickness of the positive electrode current collector is not particularly limited, but is, for example, 1 to 50 µm and may be 5 to 30 µm.

### [Negative Electrode]

The negative electrode includes at least a negative electrode current collector and may include a negative electrode active material layer. The negative electrode active material layer can be constituted of a negative electrode mixture. The negative electrode mixture contains a negative electrode active material as an essential component and may contain an optional component. Examples of the optional component include a binder, a conductive aid, and a thickener. The negative electrode active material layer may be formed by attaching a lithium metal foil or a lithium alloy foil to a surface of the negative electrode current collector. That is, the negative electrode current collector may be provided in advance with an underlayer (a layer of lithium metal or a lithium alloy (hereinafter, also referred to as a "lithium underlayer") containing lithium metal. The lithium alloy can contain an element such as aluminum, magnesium, indium, zinc, copper, or silver besides lithium. When a lithium metal underlayer is provided, dendrite deposition can be suppressed further effectively through deposition of lithium metal thereon in charging. The thickness of the lithium metal underlayer is not particularly limited but may be in the range of 5 µm to 25 µm, for example.

Examples of the negative electrode active material include a material that electrochemically absorbs and releases lithium ions, lithium metal, and lithium alloys. As the material that electrochemically absorbs and desorbs lithium ions, a carbon material or an alloy-based material is used, for example. Examples of the carbon material include graphite, graphitizable carbon (soft carbon), and non-graphitizable carbon (hard carbon). Among these, graphite, which is excellent in stability during charging and discharging and has a small irreversible capacity, is preferable. Examples of the alloy-based material include those containing at least one metal capable of forming an alloy with lithium, and specific examples thereof include silicon, tin, silicon alloys, tin alloys, and silicon compounds. Silicon oxide, tin oxide, or the like may be used, or another silicon-containing material may be used.

As the negative electrode current collector, a non-porous conductive substrate (e.g., a metal foil) or a porous conductive substrate (e.g., a mesh, a net, or a punched sheet) is used. Examples of the material of the negative electrode current collector include stainless steel, nickel, nickel alloys, copper, copper alloys, and oxygen-free copper foils. As the negative electrode current collector, a composite current collector including a resin film and a transition metal layer layered on the resin film can also be used. The resin film may contain any one of polyester resins, olefin resins, polyphenylene sulfide resins, acrylic resins, polycarbonate resins, polyether ether ketone resins, polyether sulfone resins, polyamide resins, polyimide resins, nylon resins, polyvinylidene chloride resins, ethylene-vinyl alcohol copolymers, polyvinyl alcohol resins, polystyrene resins, epoxy resins, and urethane resins, and may contain two or more of these. The transition metal layer contains at least one of copper, nickel, chromium, titanium, iron, silver, gold, tin, copper alloys, stainless steel, and a nickel alloy. The transition metal layer is formed on one or both surfaces of the resin film by a known formation method such as vapor deposition, atomic layer deposition (ALD), sputtering, or electroless plating. The composite current collector may further include a surface resin layer between the resin film and the transition metal layer. The surface resin layer contains a polymer having at least one selected from the group consisting of urethane bonds, urea bonds, melamine bonds, amide bonds, aramid bonds, and imide bonds.

### [Separator]

The separator has high ionic permeability and appropriate mechanical strength and insulating properties. Examples of the separator include a microporous thin film, a woven fabric, and a nonwoven fabric.

The thickness of the separator is, for example, 10 µm, and may be 15 µm or more, 20 µm or more, or 30 µm or more. However, it is preferable that the separator is thinner than the positive electrode in terms of energy density. The thickness of the separator is, for example, preferably less than 80 µm, and more preferably less than 50 µm.

The separator preferably includes a layer having a ratio: MD/TD of the tensile strength in the long-side direction (MD direction) to the tensile strength in the short-side direction (TD direction) of 4.5 or more. In this case, the effects achieved by satisfying at least one of the conditions (A) and (B) become more pronounced. When the ratio MD/TD is large, the separator exhibits high followability to expansion and contraction of the electrode group. Therefore, it is considered that stresses are less likely to accumulate between the electrodes, and the risk of the current being locally concentrated in the positive electrode is reduced. The ratio MD/TD may be 5.0 or more. From the viewpoint of sufficiently ensuring the flexibility of the separator, the ratio MD/TD is preferably 10 or less.

As the material of the separator, a polyolefin such as polypropylene or polyethylene is used, for example. In particular, when the material of the separator contains polypropylene, the effects achieved by satisfying at least one of the conditions (A) and (B) become more pronounced. Polyolefins are small in polarity and have excellent resistance to nonaqueous electrolytes. Polypropylene has higher strength than polyethylene and is excellent in compression resistance. A combination of a polypropylene-made separator with excellent compression resistance and the edge-treated corners and the edge-treated cross-sectional profile of the positive electrode active material layer can achieve excellent effect of short circuit suppression.

The separator may include a base layer and a heat-resistant layer layered on the base layer. A microporous thin film, a woven fabric, or a nonwoven fabric can be used as the base layer, for example. The heat-resistant layer may be provided on at least one of the surfaces of the base layer. The heat-resistant layer is preferably provided on at least the positive electrode side of the separator.

The heat-resistant layer may contain an inorganic oxide filler as a main component (e.g., 80% by mass or more of the heat-resistant layer), or may contain a heat-resistant resin as a main component (e.g., 40% by mass or more of the heat-resistant layer). As the heat-resistant resin, a polyamide resin such as an aromatic polyamide (aramid), a polyimide resin, a polyamide-imide resin, a polyacrylic acid resin, or a polyvinylidene fluoride resin may be used, for example.

### [Nonaqueous Electrolyte]

The nonaqueous electrolyte of the lithium-ion secondary battery or the lithium secondary battery has lithium-ion conductivity. The nonaqueous electrolyte may be an electrolyte in the liquid state (electrolyte solution) or a solid-state electrolyte.

As the solid-state electrolyte, a solid-state or gel-state polymer electrolyte or an inorganic solid-state electrolyte can be used, for example. As the inorganic solid-state electrolyte, a material (e.g., an oxide-based solid electrolyte, a sulfide-based solid electrolyte, or a halogen-based solid electrolyte) known in the fields of, for example, all-solid lithium-ion secondary batteries can be used. The polymer electrolyte contains, for example, a lithium salt and a matrix polymer, or a nonaqueous solvent, a lithium salt, and a matrix polymer. As the matrix polymer, a polymer material that absorbs a nonaqueous solvent to gel is used, for example. Examples of the polymer material include fluorocarbon resins, acrylic resins, and polyether resins.

The electrolyte liquid contains a nonaqueous solvent and an electrolyte salt. In the case of the lithium-ion secondary battery, the electrolyte salt includes at least a lithium salt. The concentration of the lithium salt in the electrolyte solution is 0.5 mol/L or more and 2 mol/L or less, for example. The nonaqueous electrolyte solution may contain any known additive.

Examples of the nonaqueous solvent include cyclic carbonic acid esters, chain carbonic acid esters, and cyclic carboxylic acid esters. Examples of the cyclic carbonic acid esters include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). One nonaqueous solvent may be used singly, or two or more nonaqueous solvents may be used in combination.

Examples of the lithium salt include lithium salts of chlorine-containing acids (e.g., LiClO₄, LiAlCl₄, and LiB₁₀Cl₁₀), lithium salts of fluorine-containing acids (e.g., LiPF₆, LiBF₄, LiSbF₆, LiAsF₆, LiCF₃SO₃, and LiCF₃CO₂), lithium salts of fluorine-containing acid imides (e.g., LiN (SO₂F)₂, LiN(CF₃SO₂)₂, LiN(CF₃SO₂)(C₄F₉SO₂), and LiN(C₂F₅SO₂)₂), lithium halides (e.g., LiCl, LiBr, and LiI), and oxalate complex salts (e.g., lithium bis(oxalate)borate, lithium difluoro(oxalate)borate (BF₂(C₂O₄)⁻), PF₄(C₂O₄)⁻, and PF₂(C₂O₄)₂⁻). One lithium salt may be used singly, or two or more lithium salts may be used in combination.

### (Supplemental Remarks)

According to the above description, the following techniques are disclosed.

### (Technique 1)

A nonaqueous electrolyte secondary battery including:
a positive electrode; a negative electrode; a separator provided between the positive electrode and the negative electrode, and a nonaqueous electrolyte,
wherein the positive electrode includes a positive electrode current collector, a positive electrode active material layer, and a positive electrode tab,
the positive electrode current collector has a first region and a second region,
the first region carries the positive electrode active material layer,
the second region does not carry the positive electrode active material layer and has a tab connecting portion,
the positive electrode tab is connected to the tab connecting portion,
when the positive electrode is viewed in plan, an outer contour of the positive electrode active material layer has one or more first sides adjacent to the second region, a plurality of second sides not adjacent to the second region, and a first corner where the first side and the second side intersect, and
the positive electrode active material layer has edge treatment at the first corner.

### (Technique 2)

The nonaqueous electrolyte secondary battery according to Technique 1,
wherein the outer contour of the positive electrode active material layer further has a second corner where the second sides intersect, and
the positive electrode active material layer has edge treatment at the second corner.

### (Technique 3)

The nonaqueous electrolyte secondary battery according to Technique 1 or 2,
wherein the outer contour of the positive electrode active material layer further has a third corner where the first sides intersect, and
the positive electrode active material layer has edge treatment at the third corner.

### (Technique 4)

A nonaqueous electrolyte secondary battery including:
a positive electrode; a negative electrode; a separator provided between the positive electrode and the negative electrode; and a nonaqueous electrolyte,
wherein the positive electrode includes a positive electrode current collector, a positive electrode active material layer, and a positive electrode tab,
the positive electrode current collector has a first region and a second region,
the first region carries the positive electrode active material layer,
the second region does not carry the positive electrode active material layer and has a tab connecting portion,
the positive electrode tab is connected to the tab connecting portion,
when the positive electrode is viewed in plan, an outer contour of the positive electrode active material layer has at least one first side adjacent to the second region and a plurality of second sides not adjacent to the second region, and
an end of the positive electrode active material layer corresponding to the first side has edge treatment in a cross-sectional profile in a thickness direction.

### (Technique 5)

The nonaqueous electrolyte secondary battery according to any one of Techniques 1 to 4, wherein in the negative electrode, lithium metal is deposited in charging, and
the lithium metal is dissolved in discharging.

### (Technique 6)

The nonaqueous electrolyte secondary battery according to any one of Techniques 1 to 5, wherein a shape resulting from the edge treatment is a chamfered shape.

### (Technique 7)

The nonaqueous electrolyte secondary battery according to any one of Techniques 1 to 6, wherein a shape resulting from the edge treatment is a rounded shape.

### (Technique 8)

The nonaqueous electrolyte secondary battery according to any one of Techniques 1 to 7, wherein the positive electrode and the negative electrode are wound with the separator therebetween to form an electrode group.

### (Technique 9)

The nonaqueous electrolyte secondary battery according to any one of Techniques 1 to 8, wherein a thickness of the positive electrode active material layer is 30 µm or more and 200 µm or less.

### (Technique 10)

The nonaqueous electrolyte secondary battery according to any one of Techniques 1 to 9, wherein a thickness of the separators is 30 µm or more.

### (Technique 11)

The nonaqueous electrolyte secondary battery according to any one of Techniques 1 to 10, wherein the separator has a layer having a ratio: MD/TD of a tensile strength in a long-side direction to a tensile strength in a short-side direction of 4.5 or more.

### (Technique 12)

The nonaqueous electrolyte secondary battery according to any one of Techniques 1 to 11, wherein a material of the separator contains polypropylene.

### [Examples]

Hereinafter, the nonaqueous electrolyte secondary battery according to the present disclosure will be described further in detail based on examples and comparative examples. However, the present disclosure is not limited to the following examples.

### <<Example 1>>

### (1) Positive Electrode Production

A positive electrode mixture slurry was prepared by mixing a lithium-containing transition metal oxide (NCA: positive electrode active material) containing Li, Ni, Co, and Al (molar ratio of Li to total of Ni, Co, and Al was 1.0) and having a layered rock-salt type structure, acetylene black (AB: conductive material), and polyvinylidene fluoride (PVdF: binder) in a mass ratio NCA:AB:PVdF of 95:2.5:2.5, followed by adding an appropriate amount of N-methyl-2-pyrrolidone (NMP) under stirring. The resulting positive electrode mixture slurry was applied to both surfaces of a band-shaped Al foil (positive electrode current collector) having a thickness of 15 µm, and dried. The resulting coated film of the positive electrode mixture was rolled using a roller. Next, a stack of the positive electrode current collector and the positive electrode mixture coated film thus obtained was cut into a predetermined electrode size (5 × 8 cm) to obtain a positive electrode including a positive electrode active material layer with the positive electrode current collector having a thickness of 80 µm on each surface thereof.

Next, the positive electrode active material layer (positive electrode mixture) was peeled off at one end of the positive electrode in the long-side direction to form a positive electrode current collector exposed portion as illustrated as the tab connecting portion in FIG. 1A. In the manner described above, the positive electrode current collector was divided into a first region carrying the positive electrode active material layer and a second region not carrying the positive electrode active material layer. The outer contour of the positive electrode active material layer has one first side adjacent to the second region and three second sides not adjacent to the second region. Next, at the two first corners where the first side and the corresponding second sides intersect, the positive electrode active material layer was rounded into an arc shape having a radial of curvature of 5 mm to obtain a positive electrode satisfying the condition (A). Thereafter, a positive electrode tab (150 µm in thickness) was connected to the tab connecting portion and a part of the tab connecting portion and a part of the positive electrode tab were covered with an insulative tape.

### (2) Negative Electrode Production

A band-shaped electrolytic copper foil (15 µm in thickness) was prepared as a negative electrode current collector.

### (3) Separator

A polyethylene-made microporous thin film having a thickness of 20 µm was prepared as a separator. The ratio MD/TD of the separator was set to 1.0.

### (4) Formation of Spacer on Main Surface of Separator

A dispersion of a spacer material was prepared by mixing 60 parts by volume of insulative particles (median diameter: 3 µm, volume resistivity: 10¹⁴ Ω·cm), 39 parts by volume of a binder resin, 1 part by volume of CMC (sodium salt), and water being a dispersion medium.

A dispenser was used to discharge the dispersion of the spacer material in a predetermined pattern onto one side of each of paired microporous thin films, and the resulting coated film was vacuum-dried to form a spacer.

### (5) Nonaqueous Electrolyte Preparation

Ethylene carbonate (EC) and dimethyl carbonate (DMC) were mixed in a volume ratio EC:DMC of 30:70, and LiPF₆ and LiBF₂(C₂O₄) were dissolved in the resulting mixed solvent, respectively, at a concentration of 1 mol/L and at a concentration of 0.1 mol/L to prepare a liquid nonaqueous electrolyte.

### (6) Battery Assembling

Six sheets of the positive electrodes and seven sheets of the negative electrode current collectors were stacked with the separator folded in a zigzag manner disposed therebetween in an inert gas atmosphere to produce a stacked electrode group. A separator was disposed such that the spacer formed on one side of the separator faced the negative electrode. The electrode group was housed in a bag-shaped outer casing formed of a laminated sheet with an Al layer. After the nonaqueous electrolyte was injected, the outer casing was sealed, thereby completing a battery A1 of Example 1.

### <<Example 2>>

### (1) Positive Electrode Production

A positive electrode was produced in the same manner as Example 1, except that the stack of the positive electrode current collector and the positive electrode mixture coated film was cut into a predetermined band-shaped electrode size. The positive electrode produced included a positive electrode active material layer having a thickness of 80 µm on each side of the positive electrode current collector and a tab connecting portion provided at one end thereof in the long-side direction. The positive electrode active material layer was rounded at the first corners into an arc shape having a radius of curvature of 5 mm.

### (2) Negative Electrode Production

A band-shaped electrolytic copper foil (15 µm in thickness) was prepared as a negative electrode current collector.

### (3) Separator

A polyethylene-made microporous thin film having a thickness of 20 µm with a spacer similar to that of Example 1 was prepared as a separator.

### (4) Nonaqueous Electrolyte Preparation

A nonaqueous electrolyte similar to that of Example 1 was prepared.

### (5) Battery Assembling

The positive electrode and the negative electrode current collector were spirally wound with the separator therebetween in an inert gas atmosphere to produce a wound electrode group. At that time, the separator was disposed such that the spacer formed on one side of each of paired separators faced the negative electrode. The electrode group was housed in a bag-shaped outer casing formed of a laminated sheet with an Al layer. After the nonaqueous electrolyte was injected, the outer casing was sealed, thereby completing a battery A2 of Example 2.

### <<Example 3>>

A battery A3 of Example 3 was completed in the same manner as Example 1, except that the positive electrode active material layer was rounded into an arc shape also at the two second corners where the second sides intersected.

### <<Example 4>>

A battery A4 of Example 4 was completed in the same manner as Example 3, except that the thickness of the positive electrode active material layer was changed to 160 µm.

### <<Example 5>>

A battery A5 of Example 5 was completed in the same manner as Example 1, except that the two first corners were not rounded, and the end of the positive electrode active material layer corresponding to the first side was chamfered (the length of the slope 10 mm) in the cross-sectional profile in the thickness direction.

### <<Examples 6>>

A battery A6 of Example 6 was completed in the same manner as Example 2, except that the two first corners were not rounded, the end of the positive electrode active material layer corresponding to the first side was chamfered (the length of the slope 10 mm) in the cross-sectional profile in the thickness direction, and the thickness of the positive electrode active material layer was changed to 160 µm.

### <<Examples 7>>

Furthermore, a battery A7 of Example 7 was completed in the same manner as Example 6, except that the ends of the positive electrode active material layer corresponding to the second sides extending in the long-side direction were chamfered in the cross-sectional profile (the length of the slope 10 mm) in the thickness direction.

### <<Examples 8>>

A battery A8 of Example 8 was completed in the same manner as Example 2, except that the positive electrode active material layer was rounded into an arc shape at the two second corners where the second sides intersected, the end of the positive electrode active material layer corresponding to the first side was chamfered (the length of the slope 10 mm) in the cross-sectional profile in the thickness direction, the ends of the positive electrode active material layer corresponding to the second sides extending in the long-side direction were additionally chamfered (the length of the slope 10 mm) in the cross-sectional profile in the thickness direction, and the thickness of the positive electrode active material layer was changed to 160 µm.

### <<Example 9>>

A battery A9 of Example 9 was completed in the same manner as Example 8, except that the thickness of the positive electrode active material layer was changed to 80 µm.

### <<Example 10>>

A battery A10 of Example 10 was completed in the same manner as Example 9, except that the thickness of the separator was changed to 40 µm.

### <<Example 11>>

A battery A11 of Example 11 was completed in the same manner as Example 10, except that the ratio MD/TD of the separator was changed to 5.5.

### <<Example 12>>

A battery A12 of Example 12 was completed in the same manner as Example 11, except that the material of the separator was changed to polypropylene.

### <<Comparative Example 1>>

A battery B1 of Comparative Example 1 was completed in the same manner as Example 1, except that the two first corners were not rounded, and the two second corners were rounded.

### <<Comparative Example 2>>

A battery B2 of Comparative Example 2 was completed in the same manner as Example 2, except that the two first corners were not rounded and the two second corners were rounded.

### <<Comparative Example 3>>

A battery B3 of Comparative Example 3 was completed in the same manner as Comparative Example 2, except that the two second corners were also not rounded.

### <<Comparative Example 4>>

A battery B4 of Comparative Example 4 was completed in the same manner as Comparative Example 3, except that the thickness of the separator was changed to 40 µm, the ratio MD/TD of the separator was changed to 5.5, and the material of the separator was changed to polypropylene.

### [Evaluation 1]

With respect to each of the batteries, a charge-discharge test was performed in a thermostatic bath set at 25°C under the following conditions. The pause time between charging and discharging was set to 20 minutes.

### (Charging)

Constant current charging was performed at a current of 2.15 mA per unit electrode area (square centimeter) until the battery voltage reached 4.1 V, and constant voltage charging at a voltage of 4.1 V was then performed until the current per unit electrode area reached 0.54 mA.

### (Discharging)

Constant current discharging at a current of 2.15 mA per unit electrode area was performed until the battery voltage reached 3.75 V.

A set of the above charging and discharging was defined as one cycle, and the cycle was repeated until an apparent increase in charge capacity due to an internal short circuit was observed. Table 1 shows, together with the battery configuration, the cycle number at that time point as a relative value, with the number of cycles for battery B set to 100. Once an internal short circuit occurs, the capacity is consumed by the short circuit. As a result, the energy required for charging exceeds the rated capacity of a power supply to increase the apparent capacity. It was determined that a short circuit had occurred when the ratio of an apparent capacity (A) at the cycle number where the apparent capacity started to increase to a maximum value (B) of the apparent capacity during the 20 cycles immediately thereafter satisfies B/A > 1.1. The cycle number indicating the maximum value (B) was defined as the cycle number at which a short circuit has occurred.

**[Table 1]**

| | Positive electrode | | | | | | Separator | | | Evaluation |
|---|---|---|---|---|---|---|---|---|---|---|
| | First corners rounded | Second corners rounded | First side in sectional profile chamfered | Second sides (in long-side direction) in sectional profile chamfered | Electrode group | Active material layer thickness (µm) | Thickness (µm) | Ratio MD/TD | Material | Cycle number at which short circuit has occurred (index) |
| A1 | Done | Undone | Undone | Undone | Stacked | 80 | 20 | 1 | PE | 111 |
| A2 | Done | Undone | Undone | Undone | wound | 80 | 20 | 1 | PE | 115 |
| A3 | Done | Done | Undone | Undone | Stacked | 80 | 20 | 1 | PE | 128 |
| A4 | Done | Done | Undone | Undone | Stacked | 160 | 20 | 1 | PE | 141 |
| A5 | Undone | Undone | Done | Undone | Stacked | 160 | 20 | 1 | PE | 111 |
| A6 | Undone | Undone | Done | Undone | Wound | 160 | 20 | 1 | PE | 116 |
| A7 | Undone | Undone | Done | Done | Wound | 160 | 20 | 1 | PE | 130 |
| A8 | Done | Done | Done | Done | Wound | 160 | 20 | 1 | PE | 147 |
| A9 | Done | Done | Done | Done | Wound | 80 | 20 | 1 | PE | 153 |
| A10 | Done | Done | Done | Done | Wound | 80 | 40 | 1 | PE | 157 |
| A11 | Done | Done | Done | Done | Wound | 80 | 40 | 5.5 | PE | 180 |
| A12 | Done | Done | Done | Done | Wound | 80 | 40 | 5.5 | PP | 196 |
| B1 | Undone | Done | Undone | Undone | Stacked | 80 | 20 | 1 | PE | 92 |
| B2 | Undone | Done | Undone | Undone | Wound | 80 | 20 | 1 | PE | 100 |
| B3 | Undone | Undone | Undone | Undone | Wound | 80 | 20 | 1 | PE | 64 |
| B4 | Undone | Undone | Undone | Undone | Wound | 80 | 40 | 5.5 | PP | 62 |

### [Industrial Applicability]

The nonaqueous electrolyte secondary battery according to the present disclosure is useful as a main power source of a mobile communication device, a portable electronic device, or an electric vehicle, for example.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

10: Secondary battery
11: Sealing body
12: Valve body
13: Metal plate
14: Insulating member
15: Positive electrode
15a: Positive electrode tab
   151: Positive electrode current collector
   152: Positive electrode active material layer
   153: Tab connecting portion
   152x: First side
   152y: Second side
   152a: First corner
   152b: Second corner
   152c: Third comer
16: Negative electrode
16a: Negative electrode tab
17: Separator
18: Electrode group
19: Insulative tape
21: Gasket
22: Battery can
22a: Groove
23: First insulating plate
24: Second insulating plate

## Claims

1. A nonaqueous electrolyte secondary battery comprising:
a positive electrode; a negative electrode; a separator provided between the positive electrode and the negative electrode; and a nonaqueous electrolyte,
wherein the positive electrode includes a positive electrode current collector, a positive electrode active material layer, and a positive electrode tab,
the positive electrode current collector has a first region and a second region,
the first region carries the positive electrode active material layer,
the second region does not carry the positive electrode active material layer and has a tab connecting portion,
the positive electrode tab is connected to the tab connecting portion,
when the positive electrode is viewed in plan, an outer contour of the positive electrode active material layer has one or more first sides adjacent to the second region, a plurality of second sides not adjacent to the second region, and a first corner where the first side and the second side intersect, and
the positive electrode active material layer has edge treatment at the first corner.

2. The nonaqueous electrolyte secondary battery according to claim 1,
wherein the outer contour of the positive electrode active material layer further has a second corner where the second sides intersect, and
the positive electrode active material layer has edge treatment at the second corner.

3. The nonaqueous electrolyte secondary battery according to claim 1,
wherein the outer contour of the positive electrode active material layer further has a third corner where the first sides intersect, and
the positive electrode active material layer has edge treatment at the third corner.

4. A nonaqueous electrolyte secondary battery comprising:
a positive electrode; a negative electrode; a separator provided between the positive electrode and the negative electrode; and a nonaqueous electrolyte,
wherein the positive electrode includes a positive electrode current collector, a positive electrode active material layer, and a positive electrode tab,
the positive electrode current collector has a first region and a second region,
the first region carries the positive electrode active material layer,
the second region does not carry the positive electrode active material layer and has a tab connecting portion,
the positive electrode tab is connected to the tab connecting portion,
when the positive electrode is viewed in plan, an outer contour of the positive electrode active material layer has at least one first side adjacent to the second region and a plurality of second sides not adjacent to the second region, and
an end of the positive electrode active material layer corresponding to the first side has edge treatment in a cross-sectional profile in a thickness direction.

5. The nonaqueous electrolyte secondary battery according to claim 1 or 4,
wherein in the negative electrode, lithium metal is deposited in charging, and
the lithium metal is dissolved in discharging.

6. The nonaqueous electrolyte secondary battery according to claim 1 or 4,
wherein a shape resulting from the edge treatment is a chamfered shape.

7. The nonaqueous electrolyte secondary battery according to claim 1 or 4,
wherein a shape resulting from the edge treatment is a rounded shape.

8. The nonaqueous electrolyte secondary battery according to claim 1 or 4,
wherein the positive electrode and the negative electrode are wound with the separator therebetween to form an electrode group.

9. The nonaqueous electrolyte secondary battery according to claim 1 or 4,
wherein a thickness of the positive electrode active material layer is 30 µm or more and 200 µm or less.

10. The nonaqueous electrolyte secondary battery according to claim 1 or 4,
wherein a thickness of the separators is 30 µm or more.

11. The nonaqueous electrolyte secondary battery according to claim 1 or 4,
wherein the separator has a layer having a ratio: MD/TD of a tensile strength in a long-side direction to a tensile strength in a short-side direction of 4.5 or more.

12. The nonaqueous electrolyte secondary battery according to claim 1 or 4,
wherein a material of the separator contains polypropylene.
